# EUROPEAN PATENT SPECIFICATION

(11) **EP 0 412 846 B1**
(45) Date of publication and mention of the grant of the patent: **24.11.1993**
(21) Application number: 90308846.6
(22) Date of filing: 10.08.1990
(51) Int. Cl.: B60R 19/34

(54) **Energy absorbing structure**
Energieabsorbierendes Bauelement
Structure d'absorption d'énergie

(30) Priority: 11.08.1989 GB 8918363
(43) Date of publication of application: 13.02.1991
(73) Proprietor: FORD MOTOR COMPANY LIMITED, Brentwood, Essex CM13 3BW (GB); FORD-WERKE AKTIENGESELLSCHAFT, 50725 Köln (DE); FORD FRANCE S. A., 92506 Rueil-Malmaison Cédex (FR)
(72) Inventor: Murchie, Roy James, Maldon, Essex CM9 6AF (GB); Hull, Derek, Cambridge CB3 2QZ (GB); Vogt, Hans, D-5863 Overath (DE); Huerten, Oskar, D-5000 Koeln 30 (DE)
(74) Representative: Messulam, Alec Moses

(56) References cited:
- DE-A- 1 811 453
- FR-A- 2 375 500

## Description

This invention relates to an energy absorbing structure which may have a wide variety of applications but finds particular application in the automotive field, particularly in the mounting of bumpers on vehicles as specified in the preamble of claims 1 and 7 and as disclosed for example in DE-A- 1 811 453 and DE-C- 2 151 827.

Various proposals have been made for providing the bumper bars of motor vehicles with some energy absorbing capability, including filling the bumpers with foam and the mounting of collapsible structures between the bumper structure itself and the body structure. Whilst such arrangements provide a low level of energy absorption (but sufficient to pass statutory low speed tests), there is still a desire to provide a much greater degree of energy absorption in this area.

It is also known that a hollow conical structure is a very efficient shape for progressively absorbing energy. Not only does the amount of energy absorption increase as crushing takes place as a result of the continually increasing cross sectional area of the cone presented to the impact as crushing continues, but also a large base area of the cone ensures that the desired crushing performance is obtained over a range of impact directions. This is described in "Crash energy absorption of fibre-reinforced plastics in vehicle construction" by Hans Vogt, Peter Beardmore and Derek Hull, presented at the Mannheim Conference of the German automotive plastics society.

According to known proposals, for example as shown in DE-A- 1 811 453 and DE-C- 21 51 827, the broad base of the cone is supported on a fixed structure, and the impact load or energy to be absorbed is received at the small end. It is difficult to provide sufficient space at the front end of a motor vehicle for a cone supported in this orientation, because there is generally insufficient space at the front of the engine compartment to package the broad base of the cone.

According to claim 1 and to the present invention, there is provided an energy absorbing structure arranged between a potential impact position and a support position, wherein the structure occupies a generally conical volume with the larger end of the cone presented to the potential impact position and the smaller end at the support position, the cone being constructed so that, working from the larger end towards the smaller end, the amount of energy absorbed by destruction of the cone progressively increases.

Using the cone in an inverted position means that packaging of the structure as an energy absorption system for a vehicle bumper becomes possible because sufficient space may be found for the small end of the cone just inboard of the end of the vehicle, for example in the engine compartment or within or below the luggage compartment.

The gradually increasing energy absorption towards the smaller end of the cone can be achieved by increasing the wall thickness of the cone towards the apex. However other strategies for increasing the energy absorption can be considered; for example increasing the reinforcement density in the structure or changing the wall configuration locally.

A relatively rigid end plate can be provided at the larger end of the cone so that the destruction of the cone takes place against the plate. For example, the end plate can be secured to the inner face of a bumper structure.

The larger end of the cone is preferably associated with a triggering formation to initiate destruction. The triggering formation could be a chamfer on the end of the cone.

According to claim 7 and to a second aspect of the invention, there is provided a bumper mounting arrangement in a motor vehicle, wherein a bumper of the motor vehicle is secured to the larger end of a generally conical energy absorbing structure, the smaller end of the structure is rigidly connected to a vehicle frame member, and the conical axis of the structure is directed generally forwards from the mounting point.

The term "generally forwards" includes arrangements where the cone axis is intentionally offset towards the direction of the expected force. The offset could for example be outwards and/or upwards.

The smaller end of the structure can be constructed so that it locates and engages with a frame member, typically one of the side rails of the vehicle.

The structure is preferably formed by a moulding process, and the fastenings by which the structure is secured to the vehicle and to the bumper can be moulded into the structure.

The arrangement may be provided at the front and/or at the back of the vehicle.

The invention will now be further described, by way of example, with reference to the accompanying drawing in which:
Figure 1 is a plan view , partly in section, of a motor vehicle bumper arrangement in accordance with the invention;
Figure 2 is a section on the line B-B from Figure 1; and
Figure 3 is a detail view within the circle A from Figure 1.

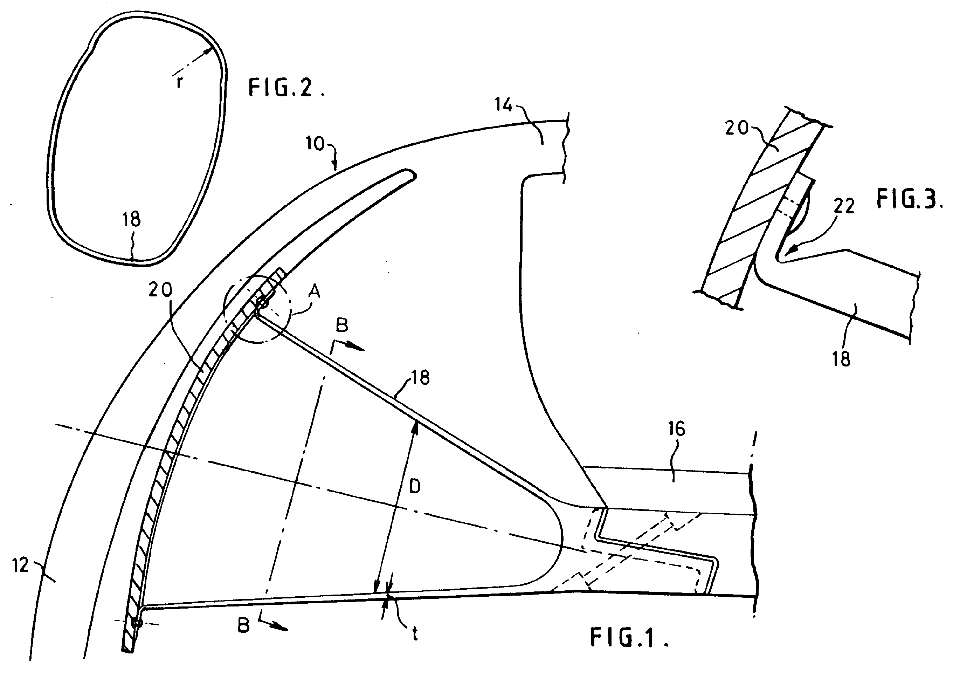

Figure 1 shows a bumper bar 10 with a front region 12 and a wrap-around side region 14. The motor vehicle chassis has a side rail 16, only the front edge of which is shown. Clearly there will be a corresponding side rail on the opposite side of the vehicle but this is not shown in the Figure.

The bumper bar 10 is connected to the side rail 16 by an energy absorbing structure 18. This energy absorbing structure is generally hollow and conical and will be constructed of a reinforced plastics material. An end plate or mandrel 20 is fitted on the inside of the bumper bar to provide a surface against which the structure 18 can be crushed.

It is significant that the broader end of the cone is mounted forwards, secured to the bumper bar. The energy absorption characteristics are of fundamental importance, and it is desired that the front end (ie the broad end) of the cone be the first to be destroyed when energy is absorbed. A specific ramp up of energy absorption is required. The desired increasing energy absorption characteristic along the cone axis requires detailed consideration of the local wall thickness (t), the wall thickness: diameter ratio (t/D) and the local wall radius (r). These parameters can be traded off to achieve the desired absorption characteristics.

It will usually be necessary to provide a triggering feature at the larger end of the cone to ensure that crushing of the cone commences at the desired position. A suitable triggering feature is a chamfer as shown at 22 in Figure 3. However other alternative triggering features are known in the art and could be used here.

The cross section of the cone may be regular but need not be so. Figure 2 shows by way of example a flattened cross section, and here the inclusion of flat areas, which have little energy absorbing ability, provides another means of tuning the energy absorption characteristics as desired.

The conical structure 18 could be manufactured by resin transfer moulding, filament winding, compression moulding of thermosetting plastics, compression moulding of thermoplastic plastics, or injection moulding of fibre reinforced plastics which may be either thermosetting or thermoplastic.

Although the invention has been described here in connection with a bumper bar support, other applications could be found wherever energy has to be absorbed, and where the force could arrive from within a given cone angle. A possible example of another application is in a motor vehicle steering column assembly where the larger end of the cone would be directed towards the driver.

The invention provides the advantages of tunable energy absorption characteristics, in the particular application described, packaging advantages in that the small end of the cone is packaged near the engine where space is at a premium, and the broad end is packaged at the bumper end where there is available space.

## Claims

1. An energy absorbing structure arranged between a potential impact position (20) and a support position (16), wherein the structure occupies a generally conical volume (18), characterised in that the larger end of the cone is presented to the potential impact position (20) and the smaller end is at the support position (16), the cone being constructed so that, working from the larger end towards the smaller end, the amount of energy absorbed by destruction of the cone progressively increases.

2. An energy absorbing structure as claimed in Claim 1, characterised in that the gradually increasing energy absorption towards the smaller end of the cone is achieved by increasing the wall thickness of the cone (18) towards the apex.

3. An energy absorbing structure as claimed in Claim 1, characterised in that the gradually increasing energy absorption is achieved by increasing the wall thickness:diameter ratio (t:D) of the cone (18) towards the apex.

4. An energy absorbing structure as claimed in Claim 1, characterised in that the gradually increasing energy absorption is achieved by modifying the cross sectional shape of the cone (18) towards the apex.

5. An energy absorbing structure as claimed in any preceding claim, characterised in that an end plate (20) is mounted over the larger end of the cone (18).

6. An energy absorbing structure as claimed in any preceding claim, characterised in that a triggering formation (22) is associated with the larger end of the cone (18).

7. A bumper mounting arrangement in a motor vehicle whereby an energy absorbing structure of a generally conical volume is secured between the bumper (10) and the motor vehicle body, characterised in that a bumper (10) of the motor vehicle is secured to the larger end of a generally conical energy absorbing structure (18), the smaller end of the structure is rigidly connected to a vehicle frame member (16), and the conical axis of the structure is directed from the mounting point towards the direction of the expected impact.

8. A bumper mounting arrangement as claimed in Claim 7, characterised in that the smaller end of the structure is constructed so that it locates and engages with a frame member (16), typically one of the side rails of the vehicle.

9. A bumper mounting arrangement as claimed in Claim 7 or Claim 8, characterised in that the structure is formed by a moulding process, and the fastenings by which the structure is secured to the vehicle and to the bumper are moulded into the structure.

## Patentansprüche

1. Energieabsorbierende Struktur, die zwischen einer potentiellen Aufprallposition (20) und einer Halteposition (16) angeordnet ist, wobei die Struktur im allgemeinen ein kegelförmiges Volumen (18) hat, dadurch gekennzeichnet, daß das breitere Ende des Kegels gegen die potentielle Aufprallposition (20) gerichtet ist und sich das schmälere Ende an der Halteposition (16) befindet, wobei der Kegel so konstruiert ist, daß ausgehend vom breiteren Ende hin zum schmaleren Ende die Menge der durch die Zerstörung des Kegels absorbierten Energie sich progressiv erhöht.

2. Energieabsorbierende Struktur nach Anspruch 1, dadurch gekennzeichnet, daß die allmählich ansteigende Energieabsorption gegen das schmalere Ende des Kegels dadurch erreicht wird, daß die Wanddicke des Kegels (18) zum Scheitelpunkt erhöht wird.

3. Energieabsorbierende Struktur nach Anspruch 1, dadurch gekennzeichnet, daß die allmählich ansteigende Energieabsorption durch eine Erhöhung des Wanddicken-Durchmesserverhältnisses (t:D) des Kegels (18) gegen den Scheitelpunkt erreicht wird.

4. Energieabsorbierende Struktur nach Anspruch 1, dadurch gekennzeichnet, daß die allmählich ansteigende Energieabsorption durch eine Veränderung der Querschnittform des Kegels (18) gegen den Scheitelpunkt erreicht wird.

5. Energieabsorbierende Struktur nach einem der vorstehenden Ansprüche, dadurch gekennzeichnet, daß eine Endplatte (20) über das breitere Ende des Kegel (18) montiert wird.

6. Energieabsorbierende Struktur nach einem der vorstehenden Ansprüche, dadurch gekennzeichnet, daß eine Auslöseformation (22) dem breiteren Ende des Kegels (18) zugeordnet wird.

7. Stoßstangenmontageanordnung in einem Kraftfahrzeug, wobei eine energieabsorbierende Struktur mit einem im allgemeinen kegelförmigen Volumen zwischen der Stoßstange (10) und der Fahrzeugkarosserie befestigt ist, dadurch gekennzeichnet, daß eine Stoßstange (10) des Kraftfahrzeuges am breiteren Ende einer im allgemeinen kegelförmigen energieabsorbierenden Struktur (18) befestigt ist, daß das schmalere Ende der Struktur mit einen Fahrzeugrahmenelement (16) starr verbunden ist, und daß die kegelförmige Achse der Struktur vom Montagepunkt gegen die Richtung des erwarteten Aufpralls gerichtet ist.

8. Stoßstangenmontageanordnung nach Anspruch 7, dadurch gekennzeichnet, daß das schmalere Ende der Struktur so konstruiert ist, daß es sich an einem Rahmenelement (16), typischerweise einer der Längsträger des Fahrzeuges, befindet und mit diesem in Eingriff steht.

9. Stoßstangenmontageanordnung nach Anspruch 7 oder Anspruch 8, dadurch gekennzeichnet, daß die Struktur durch ein Gießverfahren geformt wird, und daß die Befestigungen, mit denen die Struktur am Fahrzeug und an der Stoßstange befestigt ist, in die Struktur geformt sind.

## Revendications

1. Structure d'absorption d'énergie disposée entre une position de choc potentielle (20) et une position de support (16), dans laquelle la structure occupe un volume généralement conique (18), caractérisée en ce que l'extrémité la plus large du cône est présentée à la position de choc potentielle (20) et l'extrémité la plus petite est à la position de support (16), le cône étant réalisé de telle sorte que, partant de l'extrémité la plus large vers l'extrémité la plus petite, la quantité d'énergie absorbée par la destruction du cône augmente progressivement.

2. Structure d'absorption d'énergie selon la revendication 1, caractérisée en ce que l'absorption d'énergie graduellement croissante vers l'extrémité la plus petite du cône est obtenue en augmentant l'épaisseur de la paroi (18) du cône vers la pointe.

3. Structure d'absorption d'énergie selon la revendication 1, caractérisée en ce que l'absorption d'énergie graduellement croissante est obtenue en augmentant le rapport épaisseur de la paroi / diamètre (t / D) du cône (18) vers la pointe.

4. Structure d'absorption d'énergie selon la revendication 1, caractérisée en ce que l'absorption d'énergie graduellement croissante est obtenue en modifiant la forme de la section transversale du cône (18) vers la pointe.

5. Structure d'absorption d'énergie selon l'une des revendications précédentes, caractérisée en ce qu'une plaque de bout (20) est montée par dessus l'extrémité la plus large du cône (18).

6. Structure d'absorption d'énergie selon l'une des revendications précédentes, caractérisée en ce qu'une structure de déclenchement (22) est associée à l'extrémité la plus large du cône (18).

7. Dispositif de montage de pare-chocs dans un véhicule à moteur dans lequel une structure d'absorption d'énergie de volume généralement conique est fixée entre le pare-chocs (10) et la carrosserie du véhicule, caractérisé en ce qu'un pare-chocs (10) de véhicule à moteur est fixé sur l'extrémité la plus large d'une structure d'absorption d'énergie généralement conique (18), l'extrémité la plus petite de la structure est reliée de manière rigide à un élément de cadre du véhicule (16), et l'axe de cône de la structure est dirigé du point de montage vers la direction du choc attendu.

8. Dispositif de montage de pare-chocs selon la revendication 7, caractérisé en ce que l'extrémité la plus petite de la structure est réalisée de sorte qu'elle se loge et est en prise avec un élément de cadre (16), typiquement l'un des longerons du véhicule.

9. Dispositif de montage de pare-chocs selon la revendication 7 ou 8. caractérisé en ce que la structure est formée par un procédé de moulage, et les éléments de fixation par lesquels la structure est attachée au véhicule et au pare-chocs sont moulés dans la structure.
